# EUROPEAN PATENT SPECIFICATION

(11) **EP 4 186 946 B1**
(45) Date of publication and mention of the grant of the patent: **16.07.2025**
(21) Application number: 22209566.3
(22) Date of filing: 25.11.2022
(51) Int. Cl.: C08K 5/14, C08J 3/00

(54) **POLYETHYLENE RESIN COMPOSITION FOR PIPE, METHOD OF PREPARING SAME, AND MOLDED ARTICLE PREPARED THEREFROM**
POLYETHYLENHARZZUSAMMENSETZUNG FÜR ROHRE, VERFAHREN ZU IHRER HERSTELLUNG UND DARAUS HERGESTELLTER FORMKÖRPER
COMPOSITION DE RÉSINE DE POLYÉTHYLÈNE POUR TUYAU, SON PROCÉDÉ DE PRÉPARATION ET ARTICLE MOULÉ PRÉPARÉ À PARTIR DE CELLE-CI

(30) Priority: 30.11.2021 KR 20210168772; 29.09.2022 KR 20220124246
(43) Date of publication of application: 31.05.2023
(73) Proprietor: Hanwha TotalEnergies Petrochemical Co., Ltd., Seosan-si, Chungcheongnam-do 31900 (KR)
(72) Inventor: KIM, Young Gu, Seosan-si 31900 (KR); CHOI, Yeon Beom, Seosan-si 31900 (KR); HAN, Jae Hyuck, Seosan-si 31900 (KR)
(74) Representative: Long, Giorgio

(56) References cited:
- EP-B1- 2 798 002
- EP-B1- 2 922 881

## Description

### BACKGROUND

### 1. Field

Embodiments relates to a polyethylene resin composition for pipe, a method of preparing the same, and a molded article prepared therefrom.

### 2. Description of the Related Art

Pipes made with polyethylene have been used for water pipes, sewage pipes, industrial pipes, and the like, and have greater resistance to sagging and resistance to slow crack growth to be applicable to large-diameter pipes, and the use thereof is gradually diversifying.

When processing large-diameter pipes, resistance to sagging caused by the weight of pipe itself is indispensable, and this may improve by reducing melt index of a polyethylene resin.

Methods of reducing the melt index may include changing physical properties of the polyethylene resin itself, changing extrusion conditions as a post-treatment method, or adding peroxide upon extrusion.

The reducing of the melt index with the addition of peroxide significantly increases the resistance to sagging but tends to decrease resistance to slow crack growth and increase odor level. Meanwhile, the changing of the physical properties of the polyethylene resin itself or the reducing of the melt index only through extrusion conditions has limitations in increasing the resistance to sagging.

EP 2798002 B1 relates to polyethylene resin compositions suitable for use as pipe with good resistance to sagging and slow crack growth. However, this document is silent about specific extrusion conditions, in particular in term of the extrusion rate and a specific range of extrusion temperature.

EP 2922881 B1 discloses the polymerization of ethylene in a multistep reactor using organic peroxide, but it is silent about specific extrusion conditions.

### SUMMARY

An aspect of the present invention provides a polyethylene resin composition for pipe, which is all superior in resistance to sagging of pipe, resistance to slow crack growth, and an odor level.

An aspect of the present invention provides a method of preparing the polyethylene resin composition for pipe.

Another aspect of the present invention provides a molded article prepared from the polyethylene resin composition for pipe.

The invention is as defined in the attached claims.

According to the invention as claimed in the attached claims, a polyethylene resin composition for pipe has a melt index (under a load of 5 kg, at 190 °C) of 0.16 g/10 min to 0.24 g/10 min, and is prepared by passing through a two stage reactor, passing through an extruder, and adding peroxide, wherein a rate of change in the melt index (MI) (under a load of 5 kg, at 190 °C) by the extruder is 60% to 90% according to Equation 1 below, and a rate of change in the melt index (MI) (under a load of 5 kg, at 190 °C) by the peroxide is 10% to 40% according to Equation 2 below. {(MI after passing through two stage reactor - MI after passing through extruder) / (MI after passing through two stage reactor - final MI)} X 100 {(MI after passing through extruder - MI after adding peroxide) / (MI after passing through two stage reactor - final MI)} X 100

The polyethylene resin composition has a zero shear viscosity (η0) of 8,000,000 poise to 20,000,000 poise.

The polyethylene resin composition may have a melt strength of 200 mN to 300 mN.

A rate of reduction in drop time in the presence of sagging versus drop time in the absence of sagging upon extrusion of the polyethylene resin composition may be 0% to 17%, and the drop time may be measured using a single screw extruder.

The polyethylene resin composition has a strain hardening modulus of 53 MPa to 80 MPa.

According to the invention as claimed in the attached claims, the method of preparing a polyethylene resin composition for pipe includes passing through a two stage reactor to obtain a polyethylene resin, and adding peroxide to the polyethylene resin and passing through an extruder to obtain a polyethylene resin composition, wherein the extruder is operated at a temperature of 230 °C to 250 °C and a rate of 1,050 rpm to 1,150 rpm.

The peroxide may be added in an amount of 0.001 parts by weight to 0.01 parts by weight with respect to 100 parts by weight of the polyethylene resin.

The melt index (under a load of 5 kg, at 190 °C) of the polyethylene resin after passing through the two stage reactor is 0.32 g/10 min to 0.44 g/10 min.

The melt index (under a load of 5 kg, at 190 °C) of the polyethylene resin composition after passing through the extruder before adding the peroxide is 0.24 g/10 min to 0.32 g/10 min.

The melt index (under a load of 5 kg, at 190 °C) of the polyethylene resin composition after adding the peroxide and passing through the extruder is 0.16 g/10 min to 0.24 g/10 min.

According to another embodiment, provided is a molded article prepared from the polyethylene resin composition for pipe.

### DETAILED DESCRIPTION

Hereinafter, embodiments will be described in detail, and may be readily performed by those who have common knowledge in the related art. However, embodiments may be embodied in many different forms and should not be construed as limited to the embodiments set forth herein.

The polyethylene resin composition for pipe according to the invention has a melt index (under a load of 5 kg, at 190 ° C) of 0.16 g/10 min to 0.24 g/10 min, for example, 0.18 g/10 min to 0.22 g/10 min. When the melt index of the polyethylene resin composition is within the above range, processing load and surface roughness of products are reduced upon pipe processing, and resistance to sagging of pipe and strain hardening modulus thereof may be increased. Accordingly, a polyethylene resin composition which is superior in both resistance to sagging of pipe and resistance to slow crack growth may be obtained.

In the polyethylene resin composition, the melt index may change by stage in the preparation process before obtaining a final melt index. According to an embodiment, a polyethylene resin is obtained through ethylene polymerization while being subjected to passing through a two stage reactor, and then a polyethylene resin composition may be prepared while being subjected to passing through an extruder together with the addition of peroxide to the polyethylene resin. In this case, a melt index (MI1) of the polyethylene resin right after passing through the two stage reactor, a melt index (MI2) of the polyethylene resin composition right after passing through the extruder before the addition of peroxide, and a melt index (MI3) after passing through the extruder together with the addition of peroxide, which corresponds to the melt index of a final polyethylene resin composition, may be different in each stage. That is, the melt index right after passing through the two stage reactor may change its value after passing through the extruder having predetermined operating conditions (change from MI1 to MI2), and also the melt index after passing through the extruder without the addition of peroxide may change its value after passing through the extruder having predetermined operating conditions and adding peroxide (change from MI2 to MI3).

A rate of change in the melt index (MI) (under a load of 5 kg, at 190 ° C) by the extruder, which corresponds to the rate of change from MI1 to MI2, may be 60% to 90% according to Equation 1 below, for example, 70% to 80%. {(MI after passing through two stage reactor - MI after passing through extruder) / (MI after passing through two stage reactor - final MI)} X 100

In addition, a rate of change in the melt index (MI) (under a load of 5 kg, at 190 ° C) by the peroxide, which corresponds to the rate of change from MI2 to MI3, may be 10% to 40% according to Equation 2 below, for example, 20% to 30%. {(MI after passing through extruder - MI after adding peroxide) / (MI after passing through two stage reactor - final MI)} X 100

When the rate of change in the melt index by the extruder and the rate of change in the melt index by the peroxide are each within the above ranges, a polyethylene resin composition which is all superior in the resistance to sagging of pipe, the resistance to slow crack growth and the odor level may be obtained.

The polyethylene resin composition has a zero shear viscosity (η0) of 8,000,000 poise to 20,000,000 poise, for example, 8,000,000 poise to 12,000,000 poise. The zero shear viscosity may be obtained by measuring storage modulus and loss modulus according to shear rate (unit rad/sec). When the zero shear viscosity of the polyethylene resin composition is within the above range, resistance to sagging upon pipe processing, specifically large-diameter pipe processing, may be excellent, and the polyethylene resin composition may thus be usefully used for large-diameter pipes.

The polyethylene resin composition may have a melt strength of 200 mN to 300 mN, for example, 200 mN to 250 mN. The melt strength may be obtained by measuring force for stabilization with an increase in the pulling rate of the resin at a resin temperature of 200 °C and a chamber temperature of 180 °C. When the melt strength of the polyethylene resin composition is within the above range, resistance to sagging upon pipe processing, specifically large-diameter pipe processing, may be excellent, and the polyethylene resin composition may thus be usefully used for large-diameter pipes.

In the polyethylene resin composition, a rate of reduction in drop time in the presence of sagging versus drop time in the absence of sagging upon extrusion may be 0% to 17%, for example, 10% to 17%. The drop time may be measured using a single screw extruder. Specifically, under the conditions of a temperature of 200 °C , an extrusion amount of 38.1 g/min, and an initial linear velocity of an extruded resin of 0.546 cm/sec upon extrusion, when the height to the ground is 90.5 cm and the extruded resin does not sag, with respect to a case where the time to reach the ground is 165.7 seconds, time that the polyethylene resin composition reaches the ground may be measured to determine reduction rate relative to the case where the above sagging is not caused. When the reduction rate of drop time is within the above range, resistance to sagging upon pipe processing, specifically large-diameter pipe processing, may be excellent, and the polyethylene resin composition may thus be usefully used for large-diameter pipes.

The polyethylene resin composition has a strain hardening modulus of 53 MPa to 80 MPa, for example, 53 MPa to 70 MPa. When the strain hardening rate of the polyethylene resin composition is within the above range, the resistance to slow crack growth is excellent to allow long term use of pipes and provide large-diameter pipes having excellent durability.

Hereinafter, a method of preparing the polyethylene resin composition for pipe according to another embodiment will be described.

The polyethylene resin composition is prepared by passing through a two stage reactor to obtain a polyethylene resin, and adding peroxide to the polyethylene resin and passing through an extruder. In this case, the extruder may be operated at a temperature of 230 °C to 250 °C, for example, a temperature of 240 °C to 250 °C, and a rate of 1,050 rpm to 1,150 rpm, for example, a rate of 1,080 rpm to 1,140 rpm.

When the polyethylene resin composition is prepared through an extruder operating within the temperature and rate ranges, the rate of change in the melt index (MI) (under a load of 5 kg, at 190 ° C) of the polyethylene resin composition by the extruder may be obtained within the range of 60% to 90%, and accordingly, a polyethylene resin composition which is all superior in the resistance to sagging of pipe, the resistance to slow crack growth and the odor level may be obtained. The rate of change in the melt index by the extruder may be obtained according to Equation 1 as described above.

Specifically, the melt index (under a load of 5 kg, at 190 °C) of the polyethylene resin after passing through the two stage reactor is 0.32 g/10 min to 0.44 g/10 min, for example, 0.35 g/10 min to 0.42 g/10 min. In addition, the melt index (under a load of 5 kg, at 190 °C) of the polyethylene resin composition after passing through the extruder before adding the peroxide is 0.24 g/10 min to 0.32 g/10 min, for example, 0.24 g/10 min to 0.28 g/10 min.

In addition, since the polyethylene resin composition is prepared by passing through the extruder together with the addition of peroxide, the rate of change in the melt index (MI) (under a load of 5 kg, at 190 ° C) of the polyethylene resin composition by the peroxide may be obtained within the range of 10% to 40%, and accordingly, a polyethylene resin composition which is all superior in the resistance to sagging of pipe, the resistance to slow crack growth and the odor level may be obtained.

Specifically, the melt index (under a load of 5 kg, at 190 ° C) of the polyethylene resin composition after passing through the extruder before the addition of peroxide, and the melt index of the polyethylene resin composition after passing through the extruder together with the addition of peroxide, that is, the melt index of a final polyethylene resin composition, are each as described above.

The peroxide may be added in an amount of 0.001 parts by weight to 0.01 parts by weight with respect to 100 parts by weight of the polyethylene resin, for example, 0.001 parts by weight to 0.005 parts by weight or, as specifically claimed in claim 1, 0.001 parts by weight to 0.003 parts by weight. When peroxide is added within the above amount range, a polyethylene resin composition which is all superior in the resistance to sagging of pipe, the resistance to slow crack growth, and the odor level may be obtained.

In the stage of obtaining the polyethylene resin composition, an additive including an antioxidant, a neutralizing agent, or a combination thereof may be further included. The additive may be included in an amount of 0.01 parts by weight to 0.5 parts by weight with respect to 100 parts by weight of the polyethylene resin composition.

The antioxidant may include 1,3,5-trimethyl-2,4,6-tris(3,5-di-tert-butyl-4-hydroxybenzyl)benzene, 1,6-bis[3-(3,5)-di-tert-butyl-4-hydroxyphenyl)propionamido]hexane, 1,6-bis[3-(3,5-di-tert-butyl-4-hydroxyphenyl)propionamido]propane, tetrakis[methylene(3,5-di-tert-butyl-4-hydroxyhydrocinnamate)]methane, bis(2,6-di-tert-butyl-4-methylphenyl)pentaerythritol-di-phosphite , bis(2,4-di-tert-butylphenyl)pentaerythritol-di-phosphite, or a combination thereof.

The antioxidant may be included in an amount of 0.01 parts by weight to 0.5 parts by weight, or, as specifically as claimed in claim 1, 0.2 parts by weight to 0.4 parts by weight, with respect to 100 parts by weight of the polyethylene resin composition. When the antioxidant is added within the above amount range, a polyethylene resin composition which is all superior in the resistance to sagging of pipe, the resistance to slow crack growth, and the odor level may be obtained.

The neutralizing agent may include calcium stearic acid, zinc stearic acid, magnesium aluminum hydroxy carbonate, zinc oxide, magnesium hydroxy stearic acid, or a combination thereof.

The neutralizing agent may be included in an amount of 0.01 parts by weight to 0.3 parts by weight, or, as specifically claimed in claim 1, 0.1 parts by weight to 0.2 parts by weight, with respect to 100 parts by weight of the polyethylene resin composition. When neutralizing agent is added within the above amount range, a polyethylene resin composition which is all superior in the resistance to sagging of pipe, the resistance to slow crack growth, and the odor level may be obtained.

According to another embodiment, a molded article prepared from the polyethylene resin composition described above is provided.

The molded article may be a pipe used for a water pipe, a sewage pipe, and an industrial pipe, specifically a large-diameter pipe having a large diameter.

The polyethylene resin composition for pipe is all superior in resistance to sagging of the pipe, resistance to slow crack growth, and an odor level, and may thus be usefully used for large-diameter pipes.

Hereinafter, specific examples of the present invention are presented. However, the following examples are merely used to illustrate or describe the present invention in more detail, and are not to be seen as limiting the present invention. Furthermore, what is not described herein may be sufficiently understood by those skilled in the art who have knowledge in this field, and thus are omitted.

### (Preparation of polyethylene resin composition)

### Example 1

Ethylene polymerization was performed using a ziegler-natta catalyst and a 1-hexene co-monomer through a series polymerization method in which two reactors were connected in series.

The powder-type polyethylene resin obtained after the two stage reactor had a melt index (under a load of 5 kg, at 190 °C) of 0.40 g/10 min.

0.15 parts by weight of Irganox 1010 and 0.15 parts by weight of Irgafos-168 as antioxidants, 0.15 parts by weight of calcium stearic acid as a neutralizing agent, and 0.0015 parts by weight of Trigonox 101 as peroxide were mixed to 100 parts by weight of the powdered polyethylene resin obtained above with a Henschel mixer to prepare a polyethylene resin composition in the form of pellets, using a twin screw extruder. In this case, a screw having a diameter of 608 mm and an L/D (screw length/diameter) of 8 was used as the twin screw extruder, and the twin screw extruder was operated at a temperature of 240 °C and a rate of 1,090 rpm.

The polyethylene resin composition in the form of pellets prepared therefrom had a melt index (under a load of 5 kg, at 190 °C) of 0.25 g/10 min before adding the peroxide, and 0.21 g/10 min after adding the peroxide. This is shown in Table 1 below.

### Example 2

Ethylene polymerization was performed using a ziegler-natta catalyst and a 1-hexene co-monomer through a series polymerization method in which two reactors were connected in series.

The powder-type polyethylene resin obtained after the two stage reactor had a melt index (under a load of 5 kg, at 190 °C) of 0.40 g/10 min.

0.15 parts by weight of Irganox 1010 and 0.15 parts by weight of Irgafos-168 as antioxidants, 0.15 parts by weight of calcium stearic acid as a neutralizing agent, and 0.002 parts by weight of Trigonox 101 as peroxide were mixed to 100 parts by weight of the powdered polyethylene resin obtained above with a Henschel mixer to prepare a polyethylene resin composition in the form of pellets, using a twin screw extruder. In this case, a screw having a diameter of 608 mm and an L/D (screw length/diameter) of 8 was used as the twin screw extruder, and the twin screw extruder was operated at a temperature of 240 °C and a rate of 1,090 rpm.

The polyethylene resin composition in the form of pellets prepared therefrom had a melt index (under a load of 5 kg, at 190 °C) of 0.25 g/10 min before adding the peroxide, and 0.19 g/10 min after adding the peroxide. This is shown in Table 1 below.

### Comparative Example 1

A polyethylene resin composition was prepared in the same manner as in Example 1, except that peroxide was not added in Example 1.

The polyethylene resin composition in the form of pellets prepared therefrom had a melt index (under a load of 5 kg, at 190 °C) of 0.25 g/10 min.

### Comparative Example 2

The powdered polyethylene resin obtained after the two stage reactor had a melt index (under a load of 5 kg, at 190 °C) of 0.35 g/10 min instead of 0.40 g/10 min, and a polyethylene resin composition was prepared in the same manner as in Example 1, except that peroxide was not added.

The polyethylene resin composition in the form of pellets prepared therefrom had a melt index (under a load of 5 kg, at 190 °C) of 0.21 g/10 min.

### Comparative Example 3

A polyethylene resin composition was prepared in the same manner as in Example 1, except that peroxide was not added in Example 1, and the twin screw extruder was operated at a temperature of 252 °C and a rate of 1,140 rpm.

The polyethylene resin composition in the form of pellets prepared therefrom had a melt index (under a load of 5 kg, at 190 °C) of 0.21 g/10 min.

### Comparative Example 4

Ethylene polymerization was performed using a ziegler-natta catalyst and a 1-hexene co-monomer through a series polymerization method in which two reactors were connected in series.

The powder-type polyethylene resin obtained after the two stage reactor had a melt index (under a load of 5 kg, at 190 °C) of 0.41g/10 min.

0.15 parts by weight of Irganox 1010 and 0.15 parts by weight of Irgafos-168 as antioxidants, 0.15 parts by weight of calcium stearic acid as a neutralizing agent, and 0.02 parts by weight of Trigonox 101 as peroxide were mixed to 100 parts by weight of the powdered polyethylene resin obtained above with a Henschel mixer to prepare a polyethylene resin composition in the form of pellets, using a single screw extruder. In this case, a screw having a diameter of 40 mm and an L/D (screw length/diameter) of 33 was used as the single screw extruder, and the single screw extruder was operated at a temperature of 200 °C and a rate of 90 rpm.

The polyethylene resin composition in the form of pellets prepared therefrom had a melt index (under a load of 5 kg, at 190 °C) of 0.36 g/10 min before adding the peroxide, and 0.20 g/10 min after adding the peroxide. This is shown in Table 1 below.

### Evaluation: Measurement of physical properties of polyethylene resin composition

The following physical properties were measured for the polyethylene resin compositions prepared in Examples 1 and 2 and Comparative Examples 1 to 4, and the results are shown in Tables 1 and 2 below.

### Melt index (MI)

In according with ASTM D1238, the melt index was measured under a load of 5 kg at 190 °C.

### Rate of change in melt index (MI)

The rate of change in the melt index by an extruder was obtained through Equation 1 below, and the rate of change in the melt index by peroxide was obtained through Equation 2 below. {(MI after passing through two stage reactor - MI after passing through extruder) / (MI after passing through two stage reactor - final MI)} X 100 {(MI after passing through extruder - MI after adding peroxide) / (MI after passing through two stage reactor - final MI)} X 100

### Zero shear viscosity (n0)

Using an advanced rheometer expansion system (ARES, 190 °C), storage modulus G' and loss modulus G" according to shear rate (unit rad/sec) were measured and zero shear viscosity η0 was calculated through Carreau model.

### Melt strength

Force for stabilization with an increase in the pulling rate of a resin at a resin temperature of 200 °C and a chamber temperature of 180 °C was measured.

### Drop time reduction rate

A HAAKE^{™} and Rheomex OS single screw extruder was used, and a die having a diameter of 12 mm in the form of a bar was used. Temperature was set to 200 °C, extrusion rate was maintained at 38.1 g/min, and initial linear velocity of an extruded resin was 0.546 cm/sec. Height to the ground was 90.5 cm, and when the extruded resin did not sag, the time to reach the ground was 165.7 seconds. By measuring the time that each polyethylene resin composition reached the ground, the reduction rate relative to a case of no sagging was calculated.

### Strain hardening modulus (SHM)

Strain hardening modulus was measured in accordance with ISO 18488.

### Odor

100 g of the polyethylene resin composition and 5 mL of water were put into an airtight container, left in an oven at 80 °C for 3 hours, and then left at room temperature for 1 hour to evaluate odor level. The worse the odor level, the higher the score, and the score was rated on a scale of 1 to 5.

### Impact strength

Impact strength was measured through the charpy impact test at -30°C in accordance with ISO 179-1.

### Oxidation induction time (OIT)

Oxidation induction time was measured in accordance with ISO 11357-6 at 210 °C.

**[Table 1]**

| | | Example 1 | Example 2 | Comparativ e Example 1 | Comparativ e Example 2 | Comparativ e Example 3 | Comparati ve Example 4 |
|---|---|---|---|---|---|---|---|
| MI(g/10 min) | After passing through two stage reactor | 0.40 | 0.40 | 0.40 | 0.35 | 0.40 | 0.41 |
| | After passing through extruder | 0.25 | 0.25 | 0.25 | 0.21 | 0.21 | 0.36 |
| | After adding peroxide | 0.21 | 0.19 | - | - | - | 0.20 |
| Peroxide amount (parts by weight) | | 0.0015 | 0.002 | - | - | - | 0.02 |
| Extruder type | | Twin screw extruder | Twin screw extruder | Twin screw extruder | Twin screw extruder | Twin screw extruder | Single screw extruder |
| Extruder diameter (mm) | | 608 | 608 | 608 | 608 | 608 | 40 |
| Extruder L/D | | 8 | 8 | 8 | 8 | 8 | 33 |
| Extrusion rate (rpm) | | 1,090 | 1,090 | 1,090 | 1,090 | 1,140 | 90 |
| Extrusion temperature (°C) | | 240 | 240 | 240 | 240 | 252 | 200 |
| MI change rate by extruder (%) | | 79 | 71 | 100 | 100 | 100 | 24 |
| MI change rate by peroxide (%) | | 21 | 29 | 0 | 0 | 0 | 76 |

**[Table 2]**

| | Example 1 | Example 2 | Comparative Example 1 | Comparative Example 2 | Comparative Example 3 | Comparative Example 4 |
|---|---|---|---|---|---|---|
| Zero shear viscosity (poise) | 8,930,000 | 9,849,000 | 3,023,000 | 6,445,000 | 6,803,000 | 15,380,000 |
| Melt strength (mN) | 212 | 229 | 172 | 181 | 185 | 238 |
| Drop time (sec) | 139 | 142 | 127 | 132 | 133 | 151 |
| Drop time reduction rate (%) | 16 | 14 | 23 | 20 | 20 | 9 |
| Strain hardening modulus (MPa) | 61 | 58 | 64 | 78 | 68 | 44 |
| Odor | 2.2 | 2.4 | 2.1 | 2.2 | 3.1 | 4.0 |
| Impact strength (kJ/m²) | 16 | 18 | 14 | 22 | 20 | 24 |
| Oxidation induction time (min) | 55 | 55 | 56 | 55 | 44 | 42 |

Table 1 shows that in the polyethylene resin compositions according to Examples 1 and 2, the final melt index, the rate of change in the melt index by the extruder, and the rate of change in the melt index by the peroxide satisfy the predetermined ranges according to an embodiment. For Examples 1 and 2, it is seen that the resistance to sagging of pipe, the resistance to slow crack growth, and the odor level were all superior to those of Comparative Examples 1 to 4.

On the other hand, in Comparative Example 1 in which peroxide was not added, the final melt index was out of the ranges according to an embodiment, and in this case, the resistance to slow crack growth and the odor level were slightly superior, but the zero shear viscosity and the melt strength were greatly reduced and the rate of reduction in drop time was greatly increased, indicating that the resistance to sagging of pipe was reduced. In addition, in Comparative Example 2, the resistance to slow crack growth was increased, but as peroxide was not added, it is seen that the resistance to sagging of pipe was reduced.

For Comparative Example 3 as a case of excluding peroxide and passing through the extruder outside the predetermined temperature and rate conditions, it is seen that the resistance to sagging of pipe was slightly increased, but the odor level was increased due to high shear stress and the oxidation induction time was reduced.

The polyethylene resin composition of Comparative Example 4 was extruded under extrusion conditions of low shear stress using a single screw extruder to reduce the rate of change in the melt index by the extruder to 24%, and greatly increase the rate of change in the melt index according to peroxide to 76% by adding an excessive amount of peroxide. Accordingly, the resistance to sagging of pipe was greatly increased, but the resistance to slow crack growth and the oxidation induction time were greatly reduced due to the addition of high amount of peroxide, and the odor level was greatly increased.

A polyethylene resin composition for pipe according to an embodiment is all superior in resistance to sagging of pipe, resistance to slow crack growth, and odor level, and may thus be usefully used for pipes, specifically large-diameter pipes.

## Claims

1. A polyethylene resin composition for use in manufacturing pipe, which has a melt index under a load of 5 kg, at 190 °C of 0.16 g/10 min to 0.24 g/10 min,
obtainable by polymerization performed using a Ziegler-Natta catalyst and a 1-hexene co-monomer in a two stage reactor to obtain a polyethylene resin, adding peroxide to the polyethylene resin, and extruding the polyethylene resin mixture by a twin screw extruder to obtain a polyethylene resin composition
wherein the extrusion is performed at a temperature of 230 °C to 250 °C and a rate of 1,050 rpm to 1,150 rpm
wherein the melt index under a load of 5 kg, at 190 °C, measured according with ASTM D1238 of the polyethylene resin after passing a two stage reactor is 0.32 g/10 min to 0.44 g/10 min; wherein the melt index under a load of 5 kg, at 190 °C, measured according with ASTM D1238 of the polyethylene resin composition after adding the peroxide and passing through the extruder is 0.16 g/10 min to 0.24 g/10 min; and
wherein the polyethylene resin mixture comprises;
100 parts by weight of the polyethylene resin,
peroxide in amount of 0.001 parts by weight to 0.003 parts by weight with respect to 100 parts by weight of the polyethylene resin,
an antioxidant in amount of 0.2 parts by weight to 0.4 parts by weight with respect to 100 parts by weight of the polyethylene resin; and
a neutralizing agent in amount of 0.1 parts by weight to 0.2 parts by weight with respect to 100 parts by weight of the polyethylene resin, and
wherein the polyethylene resin composition has Zero shear viscosity of 8,000,000 to 12,000,000 poise, determined by using an advanced rheometer expansion system (ARES, 190 °C), storage modulus G' and loss modulus G" according to shear rate (unit rad/sec) and calculated through Carreau model, and
wherein the polyethylene resin composition has a strain hardening modulus of 53 MPa to 80 MPa measured in accordance with ISO 18488.

2. The polyethylene resin composition of claim 1, wherein the polyethylene resin composition has a melt strength of 200 mN to 300 mN, obtained by measuring force for stabilization with an increase in the pulling rate of the resin at a resin temperature of 200 °C and a chamber temperature of 180 °C.

3. The polyethylene resin composition of claim 1, wherein a rate of reduction in drop time in the presence of sagging versus drop time in the absence of sagging upon extrusion of the polyethylene resin composition is 0% to 17%, and
the drop time is measured using a single screw extruder under conditions of a temperature of 200 °C , an extrusion amount of 38.1 g/min, and an initial linear velocity of an extruded resin of 0.546 cm/sec upon extrusion, when the height to the ground is 90.5 cm.

4. A method of preparing a polyethylene resin composition according to any one of claims 1 to 3, the method comprising:
polymerization performed using a Ziegler-Natta catalyst and a 1-hexene co-monomer in a two stage reactor to obtain a polyethylene resin,
addition of peroxide to the polyethylene resin, and
extrusion of the polyethylene resin by a twin screw extruder to obtain a polyethylene resin composition;
wherein the extrusion is performed at a temperature of 230 °C to 250 °C and a rate of 1,050 rpm to 1,150 rpm;
wherein the melt index under a load of 5 kg, at 190 °C of the polyethylene resin after polymerization is 0.32 g/10 min to 0.44 g/10 min;
wherein the melt index under a load of 5 kg, at 190 °C of the polyethylene resin composition after extrusion is 0.16 g/10 min to 0.24 g/10 min; and
wherein the polyethylene resin mixture comprises;
100 parts by weight of the polyethylene resin,
the peroxide in amount of 0.001 parts by weight to 0.003 parts by weight with respect to 100 parts by weight of the polyethylene resin,
an antioxidant in amount of 0.2 parts by weight to 0.4 parts by weight with respect to 100 parts by weight of the polyethylene resin; and
a neutralizing agent in amount of 0.1 parts by weight to 0.2 parts by weight with respect to 100 parts by weight of the polyethylene resin, and
wherein the polyethylene resin composition has Zero shear viscosity of 8,000,000 to 12,000,000 poise, determined by using an advanced rheometer expansion system (ARES, 190 °C), storage modulus G' and loss modulus G" according to shear rate (unit rad/sec) and calculated through Carreau model, and
wherein the polyethylene resin composition has a strain hardening modulus of 53 MPa to 80 MPa measured in accordance with ISO 18488.

5. A molded article prepared from the polyethylene resin composition according to any one of claims 1 to 3.

## Patentansprüche

1. Polyethylenharz-Zusammensetzung zur Verwendung bei der Herstellung von Rohren, die einen Schmelzindex unter einer Last von 5 kg bei 190 °C von 0,16 g/10 min bis 0,24 g/10 min aufweist
und die durch eine Polymerisation erhältlich ist, die in einem zweistufigen Reaktor unter Verwendung eines Ziegler-Natta-Katalysators und eines 1-Hexens als Comonomer durchgeführt wird, wobei man ein Polyethylenharz erhält, Hinzufügen von Peroxid zu dem Polyethylenharz und Extrudieren des Polyethylenharzgemischs durch einen Doppelschneckenextruder, wobei man eine Polyethylen-Harzzusammensetzung erhält,
wobei die Extrusion bei einer Temperatur von 230 °C bis 250 °C und einer Rate von 1.050 rpm bis 1.150 rpm durchgeführt wird,
wobei der Schmelzindex des Polyethylenharzes unter einer Last von 5 kg bei 190 °C, der gemäß ASTM D1238 gemessen wird, nach Durchlaufen eines zweistufigen Reaktors 0,32 g/10 min bis 0,44 g/10 min beträgt; wobei der Schmelzindex der Polyethylenharz-Zusammensetzung unter einer Last von 5 kg bei 190 °C, der gemäß ASTM D1238 gemessen wird, nach Hinzufügen des Peroxids und Durchlaufen des Extruders 0,16 g/10 min bis 0,24 g/10 min beträgt; und
wobei das Polyethylenharzgemisch umfasst:
100 Gewichtsteile des Polyethylenharzes,
Peroxid in einer Menge von 0,001 Gewichtsteilen bis 0,003 Gewichtsteilen, bezogen auf 100 Gewichtsteile des Polyethylenharzes,
ein Antioxidans in einer Menge von 0,2 Gewichtsteilen bis 0,4 Gewichtsteilen, bezogen auf 100 Gewichtsteile des Polyethylenharzes; und
ein Neutralisationsmittel in einer Menge von 0,1 Gewichtsteilen bis 0,2 Gewichtsteilen, bezogen auf 100 Gewichtsteile des Polyethylenharzes, und
wobei die Polyethylenharz-Zusammensetzung eine Null-Scherviskosität von 8.000.000 bis 12.000.000 Poise aufweist, die unter Verwendung eines fortschrittlichen Rheometer-Expansionssystems (ARES, 190 °C) bestimmt wird, wobei der Speichermodul G' und der Verlustmodul G" von der Schergeschwindigkeit (Einheit rad/s) abhängen und mit dem Carreau-Modell berechnet werden, und
wobei die Polyethylenharz-Zusammensetzung einen Verfestigungsmodul von 53 MPa bis 80 MPa aufweist, der gemäß ISO 18488 gemessen wird.

2. Polyethylenharz-Zusammensetzung gemäß Anspruch 1, wobei die Polyethylenharz-Zusammensetzung eine Schmelzfestigkeit von 200 mN bis 300 mN aufweist, die dadurch erhalten wird, dass man die Kraft für die Stabilisierung mit einer Erhöhung der Zuggeschwindigkeit des Harzes bei einer Harztemperatur von 200 °C und einer Kammertemperatur von 180 °C misst.

3. Polyethylenharz-Zusammensetzung gemäß Anspruch 1, wobei die Reduktionsrate der Tropfzeit in Gegenwart von Durchhang gegenüber der Tropfzeit in Abwesenheit von Durchhang nach Extrusion der Polyethylenharz-Zusammensetzung 0% bis 17% beträgt und
die Tropfzeit mit Hilfe eines Einschneckenextruders unter Bedingungen einer Temperatur von 200 °C, einer Extrusionsmenge von 38,1 g/min und einer Anfangslineargeschwindigkeit eines extrudierten Harzes von 0,546 cm/s nach der Extrusion, wenn die Höhe über dem Boden 90,5 cm beträgt, gemessen wird.

4. Verfahren zur Herstellung einer Polyethylenharz-Zusammensetzung gemäß einem der Ansprüche 1 bis 3, wobei das Verfahren umfasst:
eine Polymerisation, die in einem zweistufigen Reaktor unter Verwendung eines Ziegler-Natta-Katalysators und eines 1-Hexens als Comonomer durchgeführt wird, wobei man ein Polyethylenharz erhält,
das Hinzufügen von Peroxid zu dem Polyethylenharz und
die Extrusion des Polyethylenharzes durch einen Doppelschneckenextruder, wobei man eine Polyethylenharz-Zusammensetzung erhält;
wobei die Extrusion bei einer Temperatur von 230 °C bis 250 °C und einer Rate von 1.050 rpm bis 1.150 rpm durchgeführt wird;
wobei der Schmelzindex des Polyethylenharzes unter einer Last von 5 kg bei 190 °C nach der Polymerisation 0,32 g/10 min bis 0,44 g/10 min beträgt;
wobei der Schmelzindex der Polyethylenharz-Zusammensetzung unter einer Last von 5 kg bei 190 °C nach der Extrusion 0,16 g/10 min bis 0,24 g/10 min beträgt; und
wobei das Polyethylenharzgemisch umfasst:
100 Gewichtsteile des Polyethylenharzes,
Peroxid in einer Menge von 0,001 Gewichtsteilen bis 0,003 Gewichtsteilen, bezogen auf 100 Gewichtsteile des Polyethylenharzes,
ein Antioxidans in einer Menge von 0,2 Gewichtsteilen bis 0,4 Gewichtsteilen, bezogen auf 100 Gewichtsteile des Polyethylenharzes; und
ein Neutralisationsmittel in einer Menge von 0,1 Gewichtsteilen bis 0,2 Gewichtsteilen, bezogen auf 100 Gewichtsteile des Polyethylenharzes, und
wobei die Polyethylenharz-Zusammensetzung eine Null-Scherviskosität von 8.000.000 bis 12.000.000 Poise aufweist, die unter Verwendung eines fortschrittlichen Rheometer-Expansionssystems (ARES, 190 °C) bestimmt wird, wobei der Speichermodul G' und der Verlustmodul G" von der Schergeschwindigkeit (Einheit rad/s) abhängen und mit dem Carreau-Modell berechnet werden, und
wobei die Polyethylenharz-Zusammensetzung einen Verfestigungsmodul von 53 MPa bis 80 MPa aufweist, der gemäß ISO 18488 gemessen wird.

5. Formkörper, hergestellt aus der Polyethylenharz-Zusammensetzung gemäß einem der Ansprüche 1 bis 3.

## Revendications

1. Composition de résine de polyéthylène destinée à être utilisée dans la fabrication d'un tuyau, qui présente un indice de fusion sous une charge de 5 kg, à 190 °C, de 0,16 g/10 min à 0,24 g/10 min,
pouvant être obtenue par une polymérisation réalisée à l'aide d'un catalyseur Ziegler-Natta et d'un comonomère de 1-hexène dans un réacteur à deux étages afin d'obtenir une résine de polyéthylène, par un ajout de peroxyde à la résine de polyéthylène et par l'extrusion du mélange de résine de polyéthylène par une extrudeuse double vis pour obtenir une composition de résine de polyéthylène,
dans laquelle l'extrusion est réalisée à une température de 230 °C à 250 °C et à une vitesse de 1 050 tr/min à 1 150 tr/min,
dans laquelle l'indice de fusion sous une charge de 5 kg, à 190 °C, mesuré selon la norme ASTM D1238, de la résine de polyéthylène après passage dans un réacteur à deux étages est de 0,32 g/10 min à 0,44 g/10 min ;
dans laquelle l'indice de fusion sous une charge de 5 kg, à 190 °C, mesuré selon la norme ASTM D1238, de la composition de résine de polyéthylène après ajout du peroxyde et passage à travers l'extrudeuse est de 0,16 g/10 min à 0,24 g/10 min ; et
dans laquelle le mélange de résine de polyéthylène comprend :
100 parties en poids de la résine de polyéthylène,
du peroxyde en une quantité de 0,001 partie en poids à 0,003 partie en poids par rapport à 100 parties en poids de la résine de polyéthylène,
un antioxydant en une quantité de 0,2 partie en poids à 0,4 partie en poids par rapport à 100 parties en poids de la résine de polyéthylène ; et
un agent de neutralisation en une quantité de 0,1 partie en poids à 0,2 partie en poids par rapport à 100 parties en poids de la résine de polyéthylène, et dans laquelle la composition de résine de polyéthylène présente une viscosité de cisaillement zéro de 8 000 000 à 12 000 000 poises, déterminée en utilisant un rhéomètre Advanced Rheometric Expansion System (ARES, 190 °C), un module de conservation G' et un module de perte G" selon la vitesse de cisaillement (unité rad/s) et calculée par le modèle de Carreau, et
dans laquelle la composition de résine de polyéthylène présente un module d'écrouissage de 53 MPa à 80 MPa, mesuré conformément à la norme ISO 18488.

2. Composition de résine de polyéthylène de la revendication 1, dans laquelle la composition de résine de polyéthylène présente une résistance à l'état fondu de 200 mN à 300 mN, obtenue par mesure de la force de stabilisation avec une augmentation de la vitesse de traction de la résine à une température de résine de 200 °C et une température de chambre de 180 °C.

3. Composition de résine de polyéthylène de la revendication 1, dans laquelle un taux de réduction du temps de chute en présence d'affaissement par rapport au temps de chute en l'absence d'affaissement lors de l'extrusion de la composition de résine de polyéthylène est de 0 % à 17 %, et
le temps de chute est mesuré à l'aide d'une extrudeuse simple vis dans des conditions d'une température de 200 °C, d'une quantité d'extrusion de 38,1 g/min et d'une vitesse linéaire initiale d'une résine extrudée de 0,546 cm/s lors de l'extrusion, lorsque la hauteur par rapport au sol est de 90,5 cm.

4. Procédé de préparation d'une composition de résine de polyéthylène selon l'une quelconque des revendications 1 à 3, le procédé comprenant :
une polymérisation réalisée à l'aide d'un catalyseur Ziegler-Natta et d'un comonomère de 1-hexène dans un réacteur à deux étages pour obtenir une résine de polyéthylène,
l'ajout de peroxyde à la résine de polyéthylène, et
l'extrusion de la résine de polyéthylène par une extrudeuse double vis pour obtenir une composition de résine de polyéthylène ;
dans lequel l'extrusion est réalisée à une température de 230 °C à 250 °C et à une vitesse de 1 050 tr/min à 1 150 tr/min ;
dans lequel l'indice de fusion sous une charge de 5 kg, à 190 °C, de la résine de polyéthylène après polymérisation est de 0,32 g/10 min à 0,44 g/10 min ;
dans lequel l'indice de fusion sous une charge de 5 kg, à 190 °C, de la composition de résine de polyéthylène après extrusion est de 0,16 g/10 min à 0,24 g/10 min ; et
dans lequel le mélange de résine de polyéthylène comprend :
100 parties en poids de la résine de polyéthylène,
le peroxyde en une quantité de 0,001 partie en poids à 0,003 partie en poids par rapport à 100 parties en poids de la résine de polyéthylène,
un antioxydant en une quantité de 0,2 partie en poids à 0,4 partie en poids par rapport à 100 parties en poids de la résine de polyéthylène ; et
un agent de neutralisation en une quantité de 0,1 partie en poids à 0,2 partie en poids par rapport à 100 parties en poids de la résine de polyéthylène, et
dans lequel la composition de résine de polyéthylène présente une viscosité de cisaillement zéro de 8 000 000 à 12 000 000 poises,
déterminée en utilisant un rhéomètre Advanced Rheometric Expansion System (ARES, 190 °C), un module de conservation G' et un module de perte G" selon la vitesse de cisaillement (unité rad/s) et calculée par le modèle de Carreau, et
dans lequel la composition de résine de polyéthylène présente un module d'écrouissage de 53 MPa à 80 MPa mesuré conformément à la norme ISO 18488.

5. Article moulé préparé à partir de la composition de résine de polyéthylène selon l'une quelconque des revendications 1 à 3.
